(19) Europäisches Patentamt

European Patent Office

Office européen des brevets

(11) **EP 0 896 204 B1**

(12) **EUROPÄISCHE PATENTSCHRIFT**

(45) Veröffentlichungstag und Bekanntmachung des Hinweises auf die Patenterteilung:
**20.02.2002 Patentblatt 2002/08**

(51) Int Cl.$^7$: **G01C 21/20**, G05D 1/02

(21) Anmeldenummer: **98108109.4**

(22) Anmeldetag: **04.05.1998**

(54) **Driftsensor für Landfahrzeuge**

Drift sensor for land vehicles

Capteur de dérive pour véhicules routiers

(84) Benannte Vertragsstaaten:
**AT BE CH FR GB IT LI NL SE**

(30) Priorität: **07.08.1997 DE 19734247**

(43) Veröffentlichungstag der Anmeldung:
**10.02.1999 Patentblatt 1999/06**

(73) Patentinhaber: **LITEF GmbH**
**79007 Freiburg (DE)**

(72) Erfinder: **Schnell, Jürgen, Dipl.-Ing.**
**79211 Denzlingen (DE)**

(74) Vertreter: **Müller, Frithjof E., Dipl.-Ing. et al**
**Müller Hoffmann & Partner Patentanwälte Innere**
**Wiener Strasse 17**
**81667 München (DE)**

(56) Entgegenhaltungen:
**EP-A- 0 769 735          WO-A-92/08176**
**US-A- 5 341 130**

**Beschreibung**

Die Erfindung bezieht sich auf fahrerlose Landfahrzeuge nach dem Oberbegriff des Patentanspruchs 1, die mit einer Navigationseinrichtung mit Koppelnavigation ausgestattet sind.

Fahrerlose Landfahrzeuge, insbesondere Transportfahrzeuge oder Flurfahrzeuge, wie sie in Lagerhallen, Montagehallen und dergleichen zum kursgenauen Transport und zur positionsgenauen Ablieferung von Teilen in zunehmendem Maße eingesetzt werden, sind in verschiedenartigen Ausführungsvarianten bekannt und beispielsweise und vorzugsweise im Zusammenhang mit Transport-systemen in folgenden Patentveröffentlichungen beschrieben:
EP-B1-0 391 206, US 4 908 557, US 4 772 832, EP-B1-0 278 853, DE-U1-87 01 762, DE-OS-1 802 793, DE-A1-36 06 418.

Es ist auch bekannt, solche fahrerlosen Landfahrzeuge mit einer Navigationsanlage vorzugsweise auf der Basis eines faseroptischen Kreisels auszustatten.

Um die Kursgenauigkeit solcher Transportfahrzeuge zu erhöhen, was insbesondere für die positionsgenaue Beschickung etwa von Fertigungsbändern Bedeutung hat, ist es unter anderem aus den genannten Dokumenten auch bekannt, entlang einer vorgegebenen Fahrtroute in den Boden oder den Fahrbahnbelag zur Kursstützung Kurskorrekturpunkte vorzugsweise in Form von Permanentmagneten einzulassen. An diesen Korrekturpunkten wird der durch die Navigationseinrichtung vorgegebene Kurs überprüft und gegebenenfalls korrigiert und aufdatiert.

Aus WO 92/08176 ist insbesondere ein fahrerloses Transportfahrzeug mit einer fest installierten Navigationseinrichtung bekannt, die durch Koppelnavigation an bestimmten, im Boden - beispielsweise einer Fabrikhalle - fest installierten Magnet-Punkten aufdatiert wird. Das Fahrzeug ist mit einem Hall-Sensor-Array ausgestattet, durch welches die im Boden fixierten, durch Permanentmagnete realisierten Aufdatpunkte erfasst werden. Die Ausgangssignale der einzelnen Hall-Sensoren werden hinsichtlich ihres Maximalwerts einem Vergleich unterzogen, um dann eine entsprechende Kurskorrektur im Rechensystem der Navigationsanlage vorzunehmen. Hierbei ergibt sich jedoch das Problem, dass eine blem, dass eine in der Regel auf mehreren Ursachen beruhende Seitendrift des Fahrzeugs zwar an den Navigationspunkten korrigiert, jedoch im Verlauf der Fahrstrecke zwischen den Navigationspunkten unter Umständen aufgrund von nicht ausreichend erfassbarer Seitendrift zu erheblichen Problemen führt.

Obwohl also solche bekannten Transportsysteme für viele sich wiederholende Transportprobleme zufriedenstellend arbeiten, ergeben sich hinsichtlich der Kursgenauigkeit noch wünschenswerte Verbesserungen. Fahrerlose Transportfahrzeuge besitzen in der Regel mit hartem Kautschuk belegte Antriebsräder. Die Oberfläche, also der Fahrbahnbelag, auf dem sich diese Transportfahrzeuge bewegen, ist nicht immer so eben, daß keine vernachlässigbaren Querkräfte entstehen. Außerdem ändern sich diese Fahrbahnbeläge im Laufe der Benutzungszeit und/oder durch das Beladen bzw. Umstellen großer Massen auf dem Transportfahrzeug, wie zum Beispiel Maschinen. Diese Querkräfte verursachen nun über den nicht unendlich steifen Kautschukbelag der Räder eine Seitenabdrift. Weiterhin entstehen bei Kurvenfahrten nicht zu vernachlässigende Querkräfte, deren Auswirkungen bei Versuchsfahrten ebenfalls als nicht vernachlässigbar beobachtet wurden. Bedingt durch diese Querkräfte können mit den derzeit bekannten Navigationsalgorithmen kurz nach einer Kurvenfahrt keine Winkelkorrekturen durchgeführt werden, um die Fahrgenauigkeit nicht zusätzlich zu beeinträchtigen.

Der Erfindung liegt damit die Aufgabe zugrunde, die Navigationsgenauigkeit von fahrerlosen Landfahrzeugen durch Kompensation der erläuterten Seitenabdrift wesentlich zu verbessern.

Grundsätzlich wäre es möglich, die Navigationsgenauigkeit auch unter Berücksichtigung der Seitenabdrift dadurch zu verbessern, daß beispielsweise der Abstand der in den Fahrbahnbelag eingelassenen und zur Kursstützung verwendeten Korrekturpunkte (Aufdatpunkte) ausreichend klein gegenüber der empirisch zu ermittelnden Periode von Unebenheiten des Bodens zu machen. Dieser Lösungsansatz würde natürlich die Kosten insbesondere der Vermessung und Installation eines solchen Transportsystems deutlich verteuern.

Die Erfindung geht einen anderen Weg; mit ihr wird vorgeschlagen, die Querbewegungen aufgrund der genannten Querkräfte mit einer am Fahrzeug installierten Meßanordnung direkt zu erfassen, wobei insbesondere und in erster Linie an einen Sensor gedacht ist, der nach dem bekannten Prinzip einer Computermaus arbeitet.

Mit Hilfe der die Querbewegungen des Fahrzeugs erfassenden Maus läßt sich über das der Navigationsanlage zugeordnete Rechnerprogramm entweder direkt der Driftwinkel der Querbewegung oder die seitliche Wegdifferenz erfassen und zur Kurskorrektur nutzen.

Gegenüber dem Lösungsansatz mit verringerter und variabler Verteilung und Anordnung der Korrekturpunkte hat die Erfindung den erheblichen Vorteil, daß auch solche nach der Installation des fahrerlosen Transportsystems, beispielsweise durch Temperaturschwankungen, Fahrbahnverwerfungen, Verschmutzung und dergleichen auftretenden Fahrbahnunregelmäßigkeiten und die dadurch verursachten Querkräfte problemlos kompensiert werden können. Bei der Installation eines fahrerlosen Transportsystems, beispielsweise in einer Montagehalle braucht daher bei der Verteilung der Korrektur-, Aufdat- oder Referenzpunkte (Magnete) nicht mehr so genau auf die mögliche Periode von Fahrbahnunebenheiten geachtet zu werden. Diese Korrekturpunkte können dann nach einem mehr oder weniger einzuhaltenden vorgegebenen Raster, gegebenenfalls auch variabel, beispielsweise im Abstand von 5m bis 40m oder in noch größerem Abstand verlegt werden.

Durch die Einbeziehung der direkt mittels des Querbewegungssensors erfaßten Seitendrift in das Navigationsprogramm wird die Navigationsgenauigkeit von fahrerlosen Landfahrzeugen, insbesondere Materialtransportfahrzeugen, erheblich verbessert.

Die Erfindung wird nachfolgend anhand eines schematischen Ausführungsbeispiels unter Bezug auf die Zeichnung kurz erläutert. Es zeigen:

Fig. 1 die Umrisse eines Transportfahrzeugs, das mit einem erfindungsgemäßen Querdriftsensor, insbesondere in Form einer Computermaus ausgerüstet ist;

Fig. 2,3 Diagramm zur Erläuterung der Funktionsweise der Erfindung und dient zur Verdeutlichung des mathematischen Ansatzes unter Berücksichtigung der Fahrzeuggeometrie eines mit einem erfindungsgemäßen Querdriftsensor ausgestatteten Fahrzeugs mit Navigationsanlage.

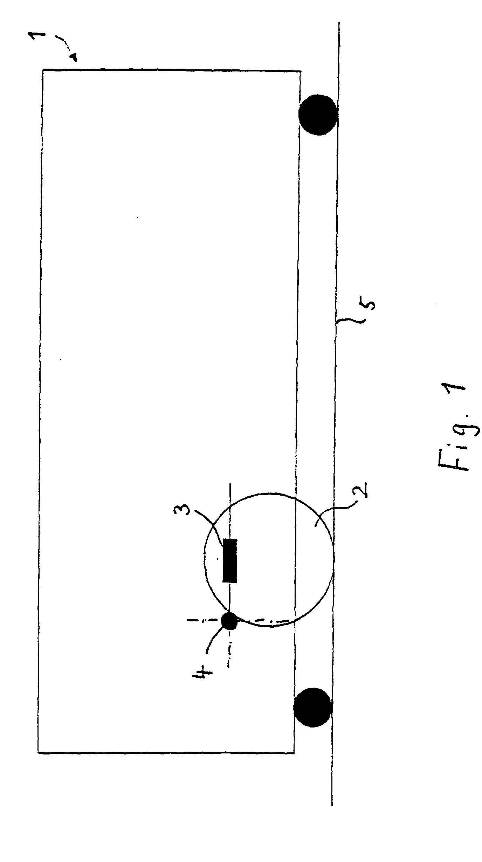

Fig. 1 veranschaulicht ein fahrerloses Transportfahrzeug 1, das auf einer Fahrbahn 5 entsprechend einem vorgegebenen Kursprogramm bewegt wird. Zur Erfassung von Querdriftbewegungen des Fahrzeugs 1 ist auf der Unterseite ein Querdriftsensor 2 insbesondere in einer einer (vergrößerten) Computermaus entsprechenden Ausführung vorgesehen mit einer vorzugs- und beispielsweise in Längserstreckung des Fahrzeugs ausgerichteteten ersten Reibrolle 3 und einer senkrecht dazu gelagerten zweiten Reibrolle 4. Die Reibrollen 3, 4 können auch als Reibkugeln ausgebildet sein.

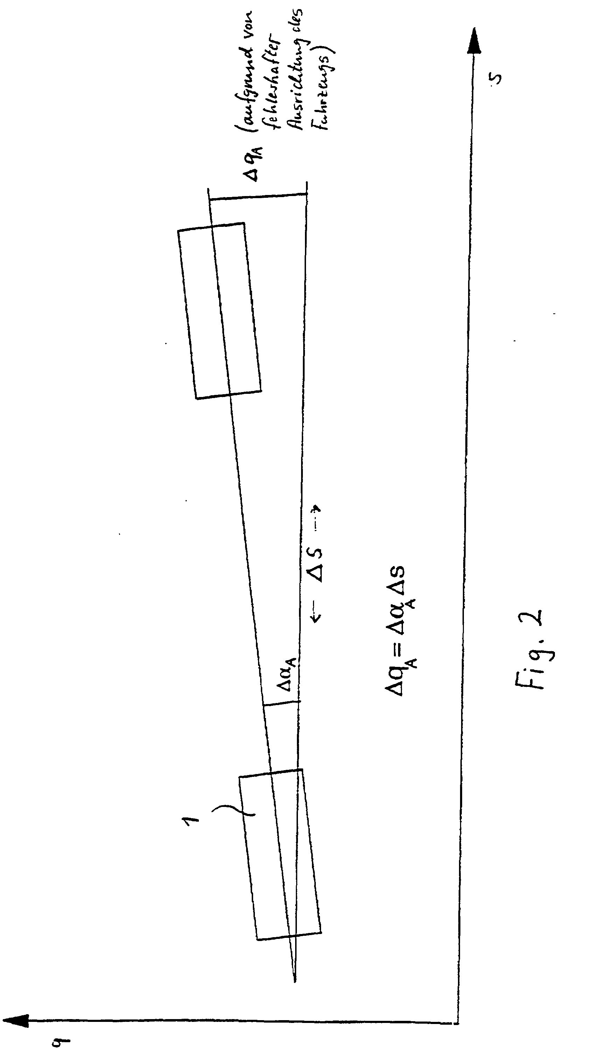

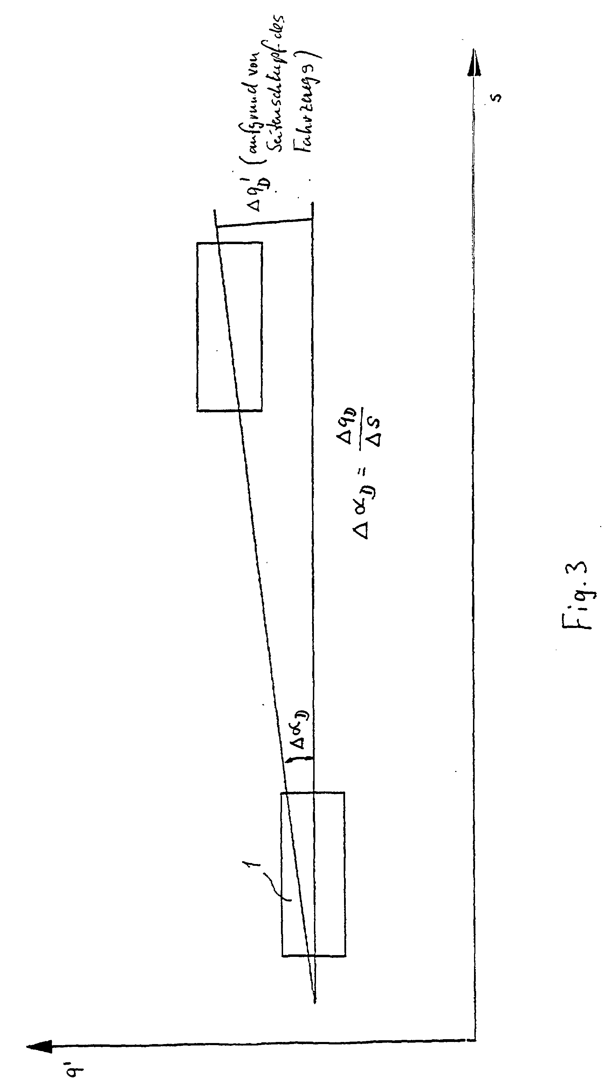

Die Figur 2 verdeutlicht, wie sich ein Querversatz $\Delta q_A$ aufgrund von fehlerhafter Ausrichtung $\Delta \alpha_A$ des Fahrzeugs 1 ergibt. Die Figur 3 andererseits zeigt, wie sich ein Querversatz $\Delta q_D$ aufgrund von Querdrift (Seitenschlupf) ohne Ausrichtfehler ergibt. Dieser Querversatz $\Delta q_D$ entspricht einem scheinbaren Ausrichtfehler $\Delta \alpha_D$, dem Driftwinkel. Um die Ausrichtung des Fahrzeugs zusätzlich zu seiner Position zu korrigieren, muß also der Gesamtquerversatz $\Delta q$ des Fahrzeugs in seine beiden Ursachen oder Ursachenkomponenten aufgespalten werden.

Es sind also zwei Fälle zu unterscheiden:

1. Mit Messung des Driftwinkels $\Delta \alpha_D$ ergibt sich der tatsächliche Ausrichtfehler $\Delta \alpha_A$ aus dem Gesamtfehlerwinkel $\Delta \alpha = \frac{\Delta q}{\Delta s}$ minus dem Driftwinkel $\Delta \alpha_D$. d. h.

$$\Delta \alpha_A = \Delta \alpha - \Delta \alpha_D.$$

2. Mit Messung des Driftversatzes $\Delta q_D$ errechnet sich der Ausrichtfehler $\Delta q_A$ aus dem Querversatz $\Delta q_D$ und dem Gesamtquerversatz $\Delta q$

$$\Delta q_A = \frac{\Delta q - \Delta q_D}{\Delta_s}$$

Das Navigationsprogramm kann dann seine Ausrichtung um den tatsächlichen Ausrichtfehler $\Delta \alpha_A$ und seine Position um $\Delta q$ (Gesamtkorrektur) korrigieren.

Die beiden Fehler, die überlagert sind. können mit den bisherigen Meßtechniken nur insgesamt korrigiert werden. Aufgrund der Erfindung wird erreicht, daß das Fahrzeug am nächsten Punkt genauer ankommt, so daß entweder der Abstand der Korrekturpunkte erhöht werden kann bzw. das Fahrzeug auf einfache Weise auf genauem Kurs bleibt.

In Erweiterung des Erfindungsgedankens könnten die bei Transportfahrzeugen der in Rede stehenden Art üblichen Radsensoren durch zwei Maus-Sensoren ersetzt werden.

Anstelle des Maussensors kann zur Messung des Driftwinkels auch ein Schlepprad verwendet werden.

**Patentansprüche**

1. Fahrerloses Landfahrzeug, das mit einer Navigationseinrichtung mit Koppelnavigation ausgestattet ist, die zur Erhaltung der Navigationsgenauigkeit entlang einer vorgegebenen Fahrtroute in den Boden oder den Fahrbahnbelag zur Kursstützung eingerichtete Korrekturpunkte mittels einer Sensoreinrichtung erfaßt, **gekennzeichnet durch** einen am Landfahrzeug (1) vorgesehenen separaten Sensor (2), der quer zur Längsachse des Landfahrzeugs auftretende Bewegungen zur besseren Kurskorrektur erfaßt.

2. Fahrerloses Landfahrzeug nach Anspruch 1, **dadurch gekennzeichnet, daß** der Sensor (2) den Driftwinkel der Querbewegung des Fahrzeugs (1) aufnimmt.

3. Fahrerloses Landfahrzeug nach Anspruch 1, **dadurch gekennzeichnet, daß** der Sensor (2) die durch die Querbewegung des Fahrzeugs (1) verursachte Wegdifferenz erfaßt.

4. Fahrerloses Landfahrzeug nach einem der vorstehenden Ansprüche, **dadurch gekennzeichnet, daß** der Sensor (2) eine erste und eine zweite Reibrolle oder Reibkugel (3,4) entsprechend dem Prinzip einer Computermaus aufweist.

5. Fahrerloses Landfahrzeug nach Anspruch 1, **dadurch gekennzeichnet, daß** der Sensor (2) als Schlepprad ausgebildet ist, das den Driftwinkel mißt.

## Claims

1. A driverless land vehicle having a navigational device equipped with coupler navigation which, for maintaining the accuracy of navigation along a given directional route, scans by means of a sensor device the correction points inserted for course checking in the floor or track surface, **characterised by** a separate sensor (2) which is provided on the land vehicle (1) and which, in order to improve course correction, detects any movements occurring that are transverse to the longitudinal axis of the land vehicle.

2. A driverless land vehicle according to claim 1, **characterised in that** the sensor (2) registers the angle of drift of the transverse movement of the vehicle (1).

3. A driverless land vehicle according to claim 1, **characterised in that** the sensor (2) detects the path difference caused by the transverse movement of the vehicle (1).

4. A driverless land vehicle according to one of the preceding claims, **characterised in that** the sensor (2) comprises an initial and a second friction roller or friction ball (3, 4) corresponding to the principle of a computer mouse.

5. A driverless land vehicle according to claim 1, **characterised in that** the sensor (2) is in the form of a drag wheel which measures the angle of drift.

## Revendications

1. Véhicule terrestre sans conducteur, qui est équipé d'un système de navigation avec navigation à l'estime qui, pour obtenir la précision de navigation, détecte, au moyen d'un système de capteur, des points de correction implantés, le long d'un itinéraire de déplacement prédéfini, dans le sol ou le revêtement de chaussée dans le but de respecter le cap, **caractérise par** un capteur séparé (2) qui est prévu sur le véhicule terrestre (1) et qui, pour une meilleure correction de cap, détecte des déplacements se produisant transversalement à l'axe longitudinal du véhicule terrestre.

2. Véhicule terrestre sans conducteur selon la revendication 1, **caractérisé en ce que** le capteur (2) enregistré l'angle de dérive du déplacement transversal du véhicule (1).

3. Véhicule terrestre sans conducteur selon la revendication 1, **caractérisé en ce que** le capteur (2) détecte la différence de trajectoire due au déplacement transversal du véhicule (1).

4. Véhicule terrestre sans conducteur selon une des revendications précédentes, **caractérisé en ce que** le capteur (2) comporte un premiér et un second galet de friction ou boule de friction (3, 4) selon le principe d'une souris d'ordinateur.

5. Véhicule terrestre sans conducteur selon la revendication 1, **caractérisé en ce que** le capteur (2) est conçu sous la forme d'une roue folle qui mesure l'angle de dérive.

EP 0 896 204 B1

Fig. 1

$$\Delta q_A = \Delta \alpha_A \, \Delta s$$

Fig. 2

EP 0 896 204 B1

$$\Delta \alpha_D = \frac{\Delta q_D}{\Delta s}$$

$\Delta q_D'$ (aufgrund von Seitenschlupf des Fahrzeugs)

$\Delta \alpha_D$

1

q'

s

Fig. 3